# EUROPEAN PATENT APPLICATION

(11) **EP 4 734 210 A1**
(43) Date of publication of application: **29.04.2026**
(21) Application number: 23942615.8
(22) Date of filing: 26.06.2023
(51) Int. Cl.: H01M 10/0562, H01M 10/0585

(54) **ALL-SOLID-STATE BATTERY**

(71) Applicant: Nissan Motor Co., Ltd., Yokohama-shi, Kanagawa 221-0023 (JP)
(72) Inventor: TAGUCHI, Kaishi, Atsugi-shi, Kanagawa 243-0123 (JP)
(74) Representative: Grünecker Patent- und Rechtsanwälte PartG mbB
(86) International application number: PCT/JP2023/023617
(87) International publication number: WO 2025/004147

(57) **Abstract**

An all-solid-state battery (1A) includes a power generating element (30) stacked with a positive electrode layer (40), a solid electrolyte layer (60), and a negative electrode layer (50) in this order along a Z-direction, a positive electrode current collector (10) in contact with the positive electrode layer (40), a negative electrode current collector (20) in contact with the negative electrode layer (50). The positive electrode layer (40) includes a side surface (40b) in contact with the solid electrolyte layer (60). The side surface (40b) inclines to approach a center of the positive electrode layer (40) as approaching from the positive electrode current collector (10) to the negative electrode current collector (20). The all-solid-state battery (1A) further includes a non-Li ion conductivity covering portion (70) that is disposed in the positive electrode current collector (10) and covers the side surface (40b), and the covering portion (70) has a thickness (T₃) in the Z-direction thinner than a thickness (T₁) of the power generating element (30) in the Z-direction.

## Description

### Technical Field

The present invention relates to an all-solid-state battery.

### Background Art

In an all-solid-state battery, a first current collector layer, a first active material layer, a second active material layer, a first solid electrolyte layer, and a second solid electrolyte layer extend outward with respect to a third active material layer and a fourth active material layer, to constitute an extending portion. In addition, an insulating resin layer is continuously disposed over one side surface of the first solid electrolyte layer, a side surface of the extending portion, and another side surface of the second solid electrolyte layer (paragraph [0043], and FIG. 2 and FIG. 4 in Patent Document 1). This insulating resin layer reduces slippage of a battery at an end portion.

### Prior Art Document

### Patent Document

Patent Document 1: JP-A-2014-116136

### Summary of Invention

### Problems to be Solved by Invention

In the all-solid-state battery as described above, there lies a problem that an insulating resin layer fails to follow when a negative electrode layer of the all-solid-state battery significantly expands or shrinks, and particle shedding from a positive electrode layer is increased.

An object that the present invention attempts to achieve is to provide an all-solid-state battery that allows for reducing particle shedding from a positive electrode layer.

### Means for Solving Problems

The present invention achieves the above-described object by disposing a non-Li ion conductivity covering portion that is disposed in a positive electrode current collector and covers a side surface of a positive electrode layer, and decreasing a thickness of the covering portion to be thinner than a thickness of a power generating element.

### Effects of Invention

The present invention allows for reducing particle shedding from a positive electrode layer.

### Brief Description of Drawings

FIG. 1 is a cross-sectional view illustrating an all-solid-state battery according to an embodiment of the present invention.
FIG. 2 is a cross-sectional view illustrating an all-solid-state battery according to a first modification of the present invention.
FIG. 3 is a cross-sectional view illustrating an all-solid-state battery according to a second modification of the present invention.
FIG. 4 is a cross-sectional view illustrating an all-solid-state battery according to a third modification of the present invention.
FIG. 5 is a conceptual drawing illustrating a distribution of positive-electrode active material particles corresponding to a size relationship between grain diameters of the positive-electrode active material particles and grain diameters of metal oxide particles according to the embodiment of the present invention.

### Mode(s) for Carrying out the Invention

The following describes an embodiment of the present invention with reference to the drawings.

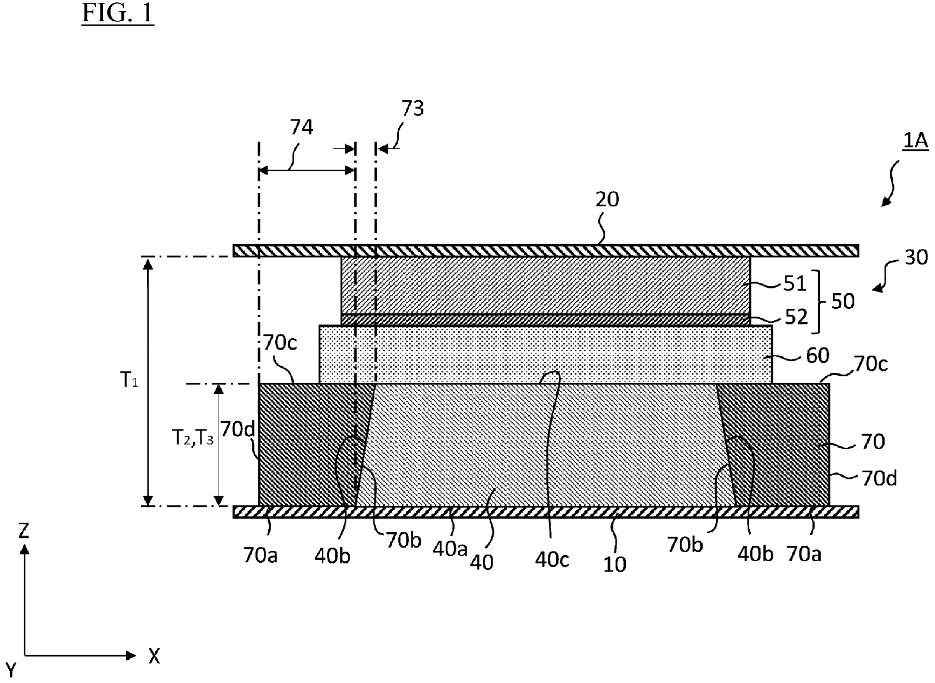

FIG. 1 is a cross-sectional view illustrating an all-solid-state battery 1A according to the embodiment. As illustrated in FIG. 1, the all-solid-state battery 1A includes a positive electrode current collector 10, a negative electrode current collector 20, a power generating element 30 interposed therebetween, and a covering portion 70. Note that while FIG. 1 extracts and illustrates one pair of the positive and negative electrode current collectors 10, 20 and the power generating element 30, the all-solid-state battery 1A may include a plurality of the positive and negative electrode current collectors 10, 20 sandwiching the power generating elements 30, and may include a plurality of the covering portions 70 covering the power generating elements 30.

The positive electrode current collector 10 is a plate-shaped (or foil-shaped) member that has conductivity, and, although it is not specifically limited, is constituted of, for example, a metal or a resin having electrical conductivity. For the metal, aluminum, nickel, iron, stainless steel, titanium, copper, or the like may be used. Alternatively, a clad material of nickel and aluminum, a clad material of copper and aluminum, or the like may be used. For the resin having electrical conductivity, a resin in which a conductive filler is added in a non-electroconductive polymer material or the like is listed.

The negative electrode current collector 20 is a plate-shaped (or foil-shaped) member having conductivity similarly to the positive electrode current collector 10, and, although it is not specifically limited, for example, is constituted of a metal or a resin having conductivity. For the metal and the resin having conductivity, a material similar to the material constituting the above-described positive electrode current collector 10 can be used. Note that the material constituting the positive electrode current collector 10 and the material constituting the negative electrode current collector 20 may be the same or may be different.

Between the positive electrode current collector 10 and the negative electrode current collector 20, the power generating element 30 is interposed. This power generating element 30 has a positive electrode layer 40, a negative electrode layer 50, and a solid electrolyte layer 60. In this power generating element 30, the positive electrode layer 40, the solid electrolyte layer 60, and the negative electrode layer 50 are stacked in this order along a Z-direction. A +Z-direction according to the embodiment corresponds to one example of a "first direction" in the present invention. That is, the first direction corresponds to a stacking direction of the positive electrode layer 40, the solid electrolyte layer 60, and the negative electrode layer 50.

The positive electrode layer 40 is formed on a main surface of the positive electrode current collector 10. This positive electrode layer 40 has a tapered shape narrowing a width as approaching from the positive electrode current collector 10 to the negative electrode current collector 20, and thus, the positive electrode layer 40 has a trapezoidal-shaped cross-sectional surface. This positive electrode layer 40 is, although not specifically limited, formable by applying a paste containing a positive-electrode active material and a binder on the main surface of the positive electrode current collector 10 and drying the paste.

This positive electrode layer 40 includes a first end surface 40a, a side surface 40b, and a second end surface 40c. The first end surface 40a is a surface that is in contact with the main surface of the positive electrode current collector 10 and is approximately parallel to the main surface of the positive electrode current collector 10.

The side surface 40b is covered with the covering portion 70. The side surface 40b is formed so as to surround the first end surface 40a and the second end surface 40c. This side surface 40b is a planar surface that inclines so as to approach the center of the positive electrode layer 40 as approaching from the positive electrode current collector 10 to the negative electrode current collector 20. This side surface 40b is not perpendicular to the main surface of the positive electrode current collector 10.

The second end surface 40c is an end surface on an opposite side of the first end surface 40a. This second end surface 40c is covered with the solid electrolyte layer 60. The second end surface 40c is a planar surface approximately parallel to the main surface of the positive electrode current collector 10.

The negative electrode layer 50 is formed on a main surface of the negative electrode current collector 20. While the negative electrode layer 50 according to the embodiment has a rectangular cross-sectional surface, the cross-sectional surface is not limited to this, and may have a trapezoidal-shaped cross-sectional surface as the positive electrode layer 40.

The negative electrode layer 50 includes a lithium metal layer 51 and an intermediate layer 52. The lithium metal layer 51 is constituted of lithium metal that has deposited on the main surface of the negative electrode current collector 20. This lithium metal layer 51 has a volume that increases as the lithium metal deposits in association with charging of the all-solid-state battery 1A, and on the other hand, decreases as the lithium metal dissipates (moves to a side of the positive electrode layer) in association with discharging. The intermediate layer 52 is a layer for assisting the deposition of the lithium metal layer 51, and contains a material capable of occluding and discharging lithium ions. This intermediate layer 52 may be omitted. Note that the lithium metal layer 51 may deposit between the intermediate layer 52 and the solid electrolyte layer 60.

The solid electrolyte layer 60 is interposed between the positive electrode layer 40 and the negative electrode layer 50. For this solid electrolyte layer, a solid electrolyte constituted of a material low in electron conductivity is usable, for example, sulfide solid electrolyte, oxide solid electrolyte, or the like is usable, however, it is preferred to use the sulfide solid electrolyte. Although it is not specifically limited, this positive electrode layer 40 is formable by applying a paste containing a solid electrolyte and a binder on the positive electrode layer 40 and the covering portion 70, and drying the paste.

The solid electrolyte layer 60 according to the embodiment covers the second end surface 40c and a fourth end surface 70c. This allows for depositing the lithium metal layer 51 only in a region between the solid electrolyte layer 60 and the negative electrode current collector 20, and therefore, stress concentration on the negative electrode layer 50 during the process of deposition and dissolution of the lithium metal layer 51 can be reduced.

The covering portion 70 covers the side surface 40b of the positive electrode layer 40, and thus, securely restrains the positive electrode layer 40. This covering portion 70 allows for reducing delamination of the positive electrode layer 40 or slippage of the positive-electrode active material from the positive electrode layer 40. That is, particle shedding of the positive electrode layer 40 is reducible.

The covering portion 70 has non-Li ion conductivity and does not conduct lithium ions. This covering portion 70 also has an electrical insulating property. Since the covering portion 70 has the non-Li ion conductivity, the lithium metal does not deposit on the covering portion 70, and therefore, occurrence of short circuit between the lithium metal and the positive electrode layer 40 or the positive electrode current collector 10 is reducible.

While a material that constitutes such a covering portion 70 is not specifically limited, for example, particles of metal oxide with non-Li ion conductivity, such as alumina, zirconia, or the like, are useable. Note that a resin material slightly has Li ion conductivity through a long time use, and therefore, is not useable. Note that examples of such a resin material include, for example, polyimide or the like.

Although not specifically limited, a paste in which metal oxide particles as described above, a binder, and the like are mixed is applied on the positive electrode current collector 10 so as to cover the side surface 40b of the positive electrode layer 40, and the paste is dried, and thus, the covering portion 70 is formable. In particular, the covering portion 70 that contains the metal oxide particles as described above is formed so as to mesh in the positive electrode layer 40 on a micrometer order or a nanometer order, and therefore, compared with the case where a resin material is used, a binding strength between the covering portion 70 and the positive electrode layer 40 can be improved. Accordingly, the covering portion 70 allows for continuously reducing particle shedding from the positive electrode layer 40 on a long-term basis.

Furthermore, a size (grain diameter) of the metal oxide particle contained in the above-described covering portion 70 is preferred to be smaller than a size (grain diameter) of the positive-electrode active material particle. Note that the "grain diameter" referred to here is not specifically limited, but can be calculated as follows. First, a cross-sectional surface of the covering portion 70 and the positive electrode layer 40 are observed with an electron microscope. When a line is drawn from one end to the other end of a particle observed on the cross-sectional surface, two points where the length of this line is maximum are identified. A distance between these two points is measured. This distance is measured for 100 particles randomly selected, and a value calculating the average can serve as the "grain diameter."

This allows for effectively reducing the positive-electrode active material getting into the covering layer 70 to be isolated from the positive electrode layer 40, thereby failing to contribute to charging and discharging since the particle size contained in the covering portion 70 is smaller than the particle size of the positive-electrode active material contained in the positive electrode layer 40, in addition to forming the above-described meshing.

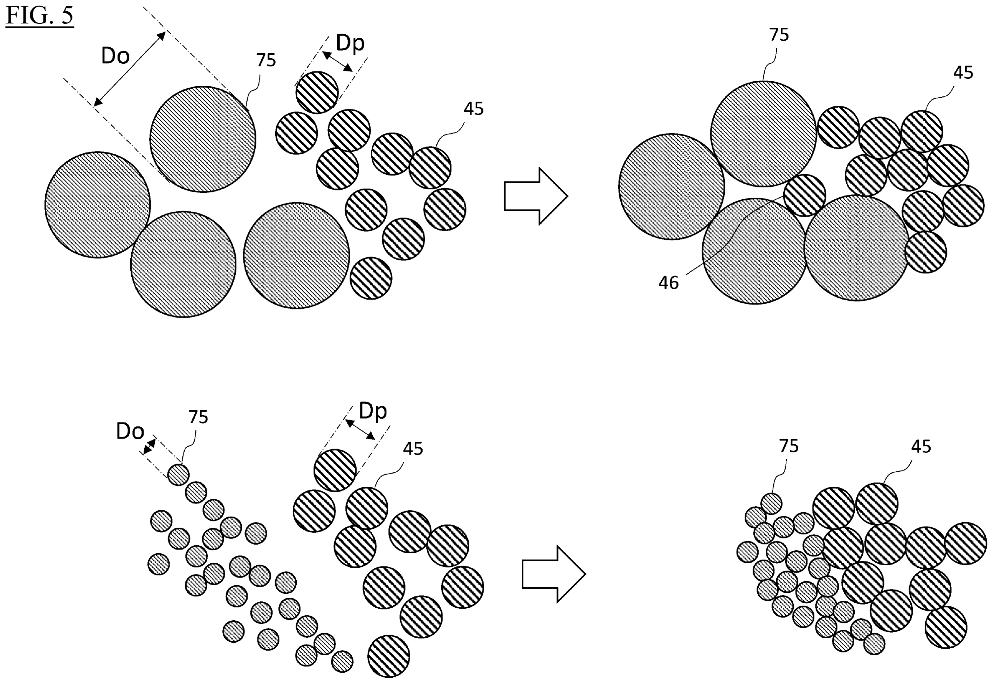

Such an effect will be specifically described using FIG. 5. FIG. 5 is a conceptual drawing illustrating a distribution of a positive-electrode active material 45 according to a size relationship between a grain diameter Dₚ of the positive-electrode active material particle 45 and a grain diameter Dₒ of a metal oxide particle 75. The drawing on the upper left and the drawing on the upper right in FIG. 5 illustrate the case where the grain diameter Dₒ of the metal oxide particle 75 is larger than the grain diameter Dₚ of the positive-electrode active material particle 45 (Dₒ > Dₚ), the drawing on the lower left and the drawing on the lower right illustrate the case where the grain diameter Dₒ of the metal oxide particle 75 is smaller than the grain diameter Dₚ of the positive-electrode active material particle 45 (Dₒ < Dₚ). The positive electrode layer 40 and the covering layer 70 are usually used after being pressed. The drawing on the upper left and the drawing on the lower left in FIG. 5 illustrate the positive-electrode active material particles 45 and the metal oxide particles 75 before being pressed and the drawing on the upper right and the drawing on the lower right illustrate the positive-electrode active material particles 45 and the metal oxide particles 75 after being pressed.

The particle with a small grain diameter gets in between the particles with large grain diameters. Accordingly, as illustrated in the drawing on the upper left and the drawing on the upper right in FIG. 5, when the grain diameter Dₒ of the metal oxide particle 75 is larger than the grain diameter Dₚ of the positive-electrode active material particle 45, the positive-electrode active material particles 45 with the small grain diameters get in between the metal oxide particles 75 when the positive electrode layer 40 and the covering layer 70 are compressed by pressing. Then, as illustrated in the drawing on the upper right in FIG. 5, positive-electrode active material particles 46 getting in between the metal oxide particles 75 are isolated from the other positive-electrode active material particles 45, and the positive-electrode active material particles 46 fail to contribute to charging and discharging.

Meanwhile, as illustrated in the drawing on the lower left and the drawing on the lower right in FIG. 5, when the grain diameter Dₒ of the metal oxide particle 75 is smaller than the grain diameter Dₚ of the positive-electrode active material particle 45, the positive-electrode active material particles 45 are less likely to get in between the oxide particles 75 during the pressing, and the isolated positive-electrode active material particles 46 are difficult to be generated. In view of this, charging and discharging characteristics of the all-solid-state battery 1A can be improved.

Although not specifically limited, this covering portion 70 has an annular shape, and covers a whole circumference of the side surface 40b. This covering portion 70 includes a third end surface 70a, a first inner surface 70b, the fourth end surface 70c, and an outer surface 70d.

The third end surface 70a is a surface in contact with the main surface of the positive electrode current collector 10, and approximately parallel to the main surface of the positive electrode current collector 10. The first inner surface 70b is in contact with the side surface 40b, and inclines to correspond to the inclination of the side surface 40b. That is, this first inner surface 70b is a planar surface that inclines so as to approach the center of the positive electrode layer 40 as approaching from the positive electrode current collector 10 to the negative electrode current collector 20.

The fourth end surface 70c is an end surface on the opposite side of the third end surface 70a. This fourth end surface 70c is at least partly covered with the solid electrolyte layer 60. The fourth end surface 70c is a planar surface approximately parallel to the main surface of the positive electrode current collector 10. The outer surface 70d is a surface on the opposite side of the first inner surface 70b, and is an outer peripheral end of the solid electrolyte layer 60.

The covering portion 70 according to the embodiment covers only the positive electrode layer 40, and does not cover other portions of the power generating element 30. In view of this, the covering portion 70 has a thickness T₃ that is substantially the same as a thickness T₂ of the positive electrode layer 40 (T₃ = T₂). Note that the thicknesses in the embodiment are the thicknesses in the Z-direction.

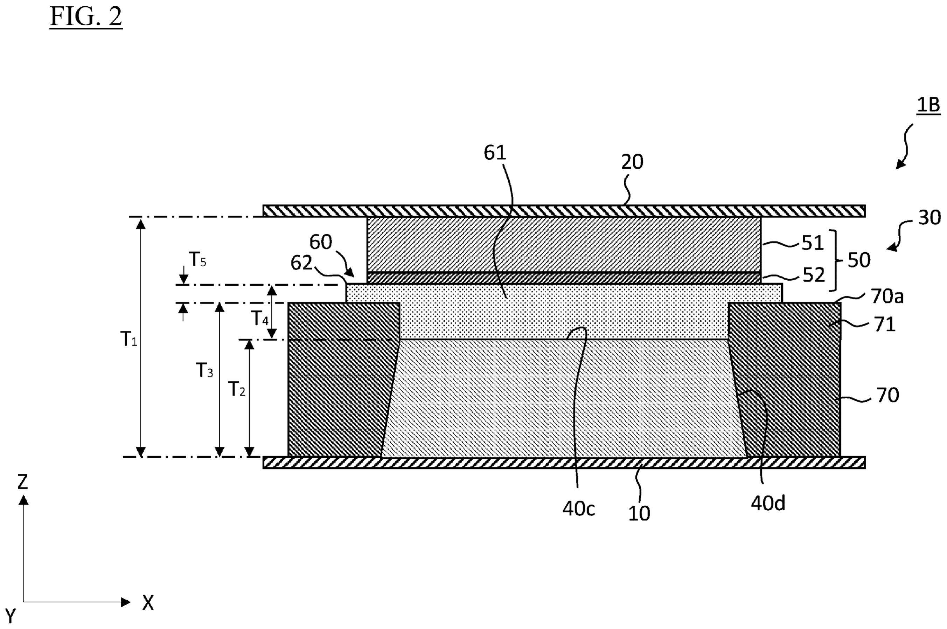

Note that, as illustrated in a modification 1 below, the thickness T₃ of the covering portion 70 may be made thicker than the thickness T₂ of the positive electrode layer 40 (T₃ > T₂). FIG. 2 is a cross-sectional view illustrating an all-solid-state battery 1B in a first modification. In this first modification, the thickness T₃ of the covering portion 70 is made thicker than the thickness T₂ of the positive electrode layer 40 (T₃ > T₂), and the covering portion 70 includes a protruding portion 71 that protrudes in the + Z-direction with respect to the second end surface 40c of the positive electrode layer 40.

The solid electrolyte layer 60 of this first modification has a shape following a surface of the protruding portion 71, and specifically, includes a first portion 61 formed on the second end surface 40c of the positive electrode layer 40 and a second portion 62 formed on the fourth end surface 70c of the protruding portion 71.

The second portion 62 has a thickness T₅ thinner than a thickness T₄ of the first portion 61. The second portion 62 is positioned outside of the first portion 61 and constitutes an outer periphery portion of the solid electrolyte layer 60. This second portion 62 being thin allows for, for example, a reduced exposure amount of the side surface of the second portion 62 compared with the solid electrolyte layer 60 of the embodiment in FIG. 1. This allows for reducing particle shedding from the solid electrolyte layer 60.

Referring again to FIG. 1, the thickness T₃ of the covering portion 70 is smaller than the thickness T₁ of the power generating element 30 (T₃ < T₁). Thus, the covering portion 70 is not formed continuously with the whole side surface of the power generating element 30 in the Z-direction, and the covering portion 70 is not in contact with the negative electrode current collector 20. Since the negative electrode layer 50 includes the lithium metal layer whose thickness significantly increases and decreases in association with charging and discharging of the all-solid-state battery 1A, the distance between the positive electrode current collector 10 and the negative electrode current collector 20 significantly changes in association with increase and decrease of the thickness of the lithium metal layer. In view of this, the covering portion fails to follow the change in the distance between the positive electrode current collector 10 and the negative electrode current collector 20, thereby breaking in some cases. In contrast to this, in the all-solid-state battery 1A according to the embodiment, the thickness T₃ of the covering portion 70 is smaller than the thickness T₁ of the power generating element 30, and therefore, the break of the covering portion 70 is avoidable without being affected by the increase and decrease of the distance between the positive electrode current collector 10 and the negative electrode current collector 20.

In particular, the covering portion 70 according to the embodiment is not in contact with the side surface of the negative electrode layer 50. If the covering portion is also formed on the side surface of the lithium metal layer, the covering portion breaks by the increase and decrease of the thickness of the lithium metal layer in some cases, however, this embodiment allows for avoiding such a break of the covering portion 70.

Note that, in this embodiment, the covering portion 70 has an inner surface constituted of the first inner surface 70b, and the whole inner surface of the covering portion 70 is in contact with the positive electrode layer 40, but the configuration is not limited to this. As illustrated in a second modification below, a part of the inner surface of the covering portion 70 may be separated from the positive electrode layer 40.

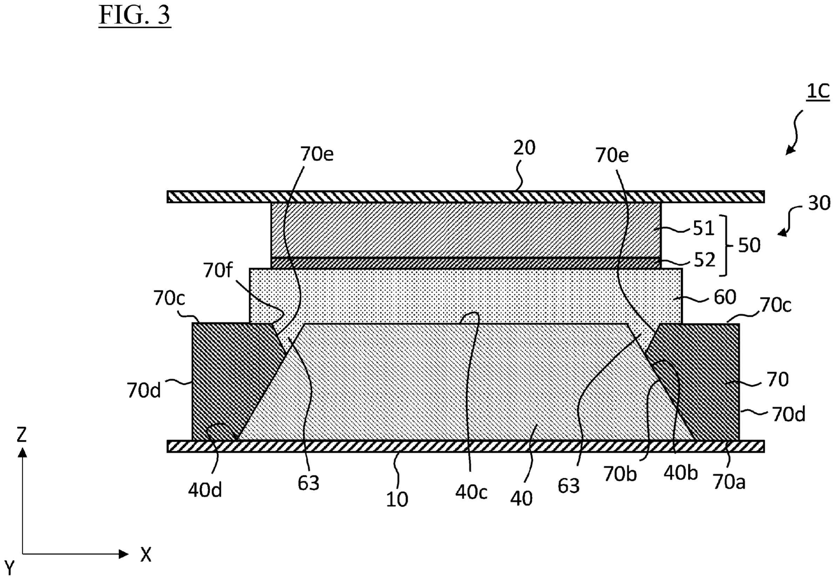

FIG. 3 is a cross-sectional view illustrating an all-solid-state battery 1C in a second modification. In this all-solid-state battery 1C, the inner surface of the covering portion 70 includes a second inner surface 70e in addition to the first inner surface 70b. The second inner surface 70e is connected to the first inner surface 70b from a side of the solid electrolyte layer 60 (+Z-direction side), and is separated from the side surface 40b of the positive electrode layer 40. In this embodiment, the second inner surface 70e inclines so as to move away from the center of the positive electrode layer 40 as approaching from the positive electrode current collector 10 to the negative electrode current collector 20.

In this second modification, the solid electrolyte layer 60 includes an interposed portion 63 interposed between the side surface 40b and the second inner surface 70e. This interposed portion 63 can increase a contacted area between the solid electrolyte layer 60 and the positive electrode layer 40, and an anchor effect by the interposed portion 63 is obtainable. In view of this, delamination between the solid electrolyte layer 60 and the positive electrode layer 40 is reducible. Increasing the contacted area between the solid electrolyte layer 60 and the positive electrode layer 40 allows for reducing current concentration at the interface between the solid electrolyte layer 60 and the positive electrode layer 40.

In this second modification, an edge 40d of the positive electrode layer 40 is positioned outside with respect to an edge 70f on a side of the second inner surface 70e of the fourth end surface 70c in a plan view viewed in the Z-direction. The edge 40d of the positive electrode layer 40 and the edge 70f of the fourth end surface 70c fulfill such a positional relationship, and therefore, the strength at the end portion of the positive electrode layer 40 can be improved, and damage on the positive electrode layer 40 is reducible.

Referring again to FIG. **1****,** the covering portion 70 includes a third portion 73 in contact with the side surface 40b of the positive electrode layer 40 and a fourth portion 74 in contact with the positive electrode current collector 10. The fourth portion 74 is positioned outside the third portion 73, and constitutes an outer periphery portion of the covering portion 70.

In this embodiment, this fourth portion 74 has a density D₁ higher than a density D₂ of the third portion 73. This allows for improving the strength of the outer periphery portion of the covering portion 70, thereby allowing for reducing damage on the covering portion 70. Although not specifically limited, for a method for adding a density difference as described above, the fourth portion 74 may be compressed by pressure application or the like to increase the density, or different materials may be used for a material constituting the fourth portion 74 and a material constituting the third portion 73, and thus the difference may be added.

Note that, while in this embodiment, the interface between the positive electrode layer 40 and the covering portion 70 is clearly formed, the interface is not necessarily clearly formed as in a third modification below.

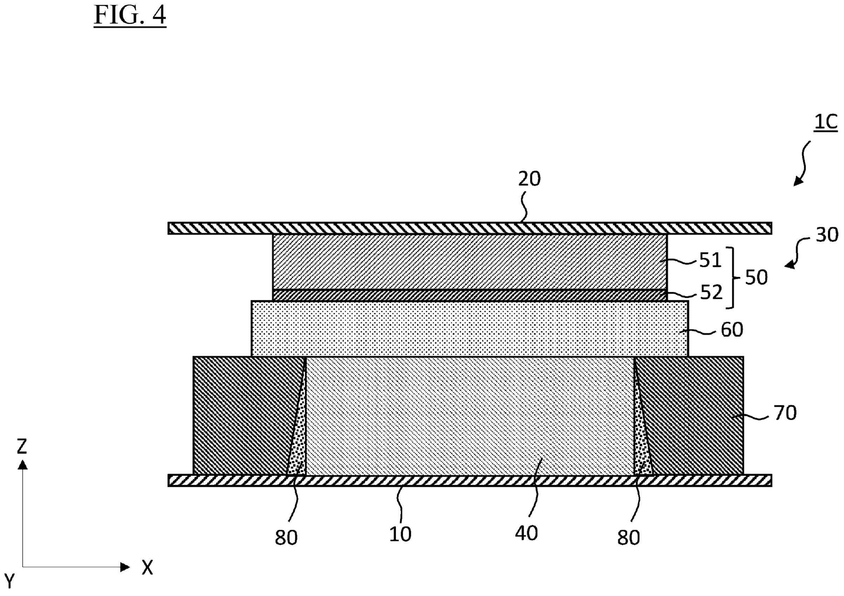

FIG. 4 is a cross-sectional view illustrating an all-solid-state battery 1D in the third modification. In this all-solid-state battery 1D, a mixed portion 80 in which the material constituting the positive electrode layer 40 and the material constituting the covering portion 70 are mixed is formed between the positive electrode layer 40 and the covering portion 70.

The mixed portion 80 is formable by applying a paste for forming the positive electrode layer 40 on the positive electrode current collector 10, applying a paste for forming the covering portion on the positive electrode current collector 10 so as to partly overlap with the paste for forming the positive electrode layer 40, and drying both the pastes.

Such a mixed portion 80 is interposed between the positive electrode layer 40 and the covering portion 70, and thus, a binding property between the positive electrode layer 40 and the covering portion 70 can be improved, thereby allowing for reducing particle shedding from the positive electrode layer 40.

### Description of Reference Numerals

- 1A to 1D: all-solid-state battery
- 10: positive electrode current collector
- 20: negative electrode current collector
- 30: power generating element
- 40: positive electrode layer
- 50: negative electrode layer
- 60: solid electrolyte layer
- 70: covering portion
- 80: mixed portion

## Claims

1. An all-solid-state battery comprising:
a power generating element stacked with a positive electrode layer, a solid electrolyte layer, and a negative electrode layer in this order along a first direction;
a positive electrode current collector in contact with the positive electrode layer; and
a negative electrode current collector in contact with the negative electrode layer, wherein
the positive electrode layer includes a side surface in contact with the solid electrolyte layer, the side surface inclining to approach a center of the positive electrode layer as approaching from the positive electrode current collector to the negative electrode current collector,
the all-solid-state battery further includes a covering portion that has non-Li ion conductivity and is disposed in the positive electrode current collector and covers the side surface, and
the covering portion has a thickness in the first direction thinner than a thickness of the power generating element in the first direction.

2. The all-solid-state battery according to claim 1, wherein
the positive electrode layer includes:
a first end surface in contact with the positive electrode current collector; and
a second end surface positioned on an opposite side of the first end surface,
the covering portion includes:
a third end surface in contact with the positive electrode current collector; and
a fourth end surface positioned on an opposite side of the third end surface, wherein
the solid electrolyte layer covers the second end surface and the fourth end surface.

3. The all-solid-state battery according to claim 2, wherein
the thickness of the covering portion in the first direction is thicker than a thickness of the positive electrode layer in the first direction,
the solid electrolyte layer includes:
a first portion in contact with the second end surface; and
a second portion in contact with the fourth end surface, and
the second portion has a thickness in the first direction thinner than the thickness of the second portion in the first direction.

4. The all-solid-state battery according to claim 2, wherein
the covering portion includes:
a first inner surface that is in contact with the side surface, and inclines to correspond to an inclination of the side surface; and
a second inner surface that connects to the first inner surface from a side of the solid electrolyte layer, and is separated from the side surface, and
the solid electrolyte layer includes an interposed portion interposed between the side surface and the second inner surface.

5. The all-solid-state battery according to claim 4, wherein
the positive electrode layer has an edge positioned outside with respect to an edge on a side of the second inner surface of the fourth end surface in a plan view viewed in the first direction.

6. The all-solid-state battery according to claim 1, wherein
the covering portion includes:
a third portion in contact with the side surface; and
a fourth portion that is positioned outside the third portion, and is in contact with the positive electrode current collector, and
the fourth portion has a density higher than a density of the third portion.

7. The all-solid-state battery according to claim 1, wherein
the all-solid-state battery further includes a mixed portion positioned between the positive electrode layer and the covering portion, and in which a material constituting the positive electrode layer and a material constituting the covering portion are mixed.
